# EUROPEAN PATENT APPLICATION

(11) **EP 4 141 272 A1**
(43) Date of publication of application: **01.03.2023**
(21) Application number: 21792325.9
(22) Date of filing: 16.04.2021
(51) Int. Cl.: F16C 11/06, F16J 3/04, F16J 15/52

(54) **BALL JOINT AND DUST COVER**

(30) Priority: 22.04.2020 JP 2020075859
(71) Applicant: NOK Corporation, Minato-ku, Tokyo 105-8585 (JP)
(72) Inventor: SASAKI, Naoya, Makinohara-shi, Shizuoka 421-0532 (JP)
(74) Representative: TBK
(86) International application number: PCT/JP2021/015737
(87) International publication number: WO 2021/215363

(57) **Abstract**

Provided are a ball joint and a dust cover of which a seal part can be prevented from being impacted due to great swings of a ball stud. A dust cover 100 includes a deformable body part 110, a fixed part 120 provided to the body part 110 on one end side and fixed to the socket 200, and a seal part 130 provided to the body part 110 on another end side, the seal part 130 has an elastic body part provided integrally with the body part 110 and having an inner peripheral seal part 131 which is configured to slide on the outer peripheral surface of the shaft 310 and a reinforcement ring 150 embedded in the elastic body part, and a tip end surface of the reinforcement ring 150 on a knuckle 400 side is at least partly exposed from the elastic body part and is in contact with the knuckle 400.

## Description

### [Technical Field]

The present invention relates to a ball joint and a dust cover provided, for example, in a vehicle.

### [Background Art]

In a conventional ball joint provided in various devices, for example, in a vehicle, a dust cover is used to prevent water and dust from entering a joint part and to prevent grease from coming out of the joint part. In a ball joint, a ball stud is provided rotatably and swingably to a socket, and a seal part of the dust cover is to keep sealing performance while moving with the rotating and swinging ball stud. In recent years, there has been a growing demand for dust covers with smaller size and ball studs with larger swinging angle. To meet the demand, a reinforcement ring made of a material such as metal is embedded inside an elastic body part of the seal part so that the seal part can more surely move with the moving ball stud.

However, with this structure, there is a concern that a dust lip made of an elastic body may be caught between the reinforcement ring and a knuckle at the seal part when the ball stud greatly swings. In this way, there is still room for improvement.

### [Citation List]

### [Patent Literature]

[PTL 1]
Japanese Patent Application Publication No. 2017-72184

### [Summary of Invention]

### [Technical Problem]

An object of the present invention is to provide a ball joint and a dust cover of which a seal part can be prevented from being impacted due to great swings of a ball stud.

### [Solution to Problem]

According to the present invention, the following means is used to achieve the object.

A ball joint according to the present invention includes:
a ball joint main body having a ball stud which has a shaft and a spherical part at one end of the shaft, a socket which has a bearing for the spherical part and supports the ball stud in a rotatable and swingable manner, and a coupling member coupled to the shaft on an opposite side to the spherical part of the shaft; and
a dust cover attached to the ball joint main body, wherein
the dust cover including:
   a deformable body part;
   a fixed part provided to the body part on one end side and fixed to the socket; and
   a seal part provided on another end side of the body part,
   the seal part including:
      an elastic body part provided integrally with the body part and having an inner peripheral seal part which is configured to slide on an outer peripheral surface of the shaft; and
      a reinforcement ring embedded in the elastic body part, and
   a tip end surface of the reinforcement ring on the coupling member side being at least partly exposed from the elastic body part and being in contact with the coupling member.

A dust cover according to the present invention is configured to be attached to a ball joint main body having a ball stud which has a shaft and a spherical part at one end of the shaft, a socket which has a bearing for the spherical part and supports the ball stud in a rotatable and swingable manner, and a coupling member coupled to the shaft on an opposite side to the spherical part of the shaft, wherein
the dust cover including:
   a deformable body part;
   a fixed part provided to the body part on one end side and fixed to the socket; and
   a seal part provided to the body part on another end side,
the seal part including:
   an elastic body part provided integrally with the body part and having an inner peripheral seal part which is configured to slide on an outer peripheral surface of the shaft; and
   a reinforcement ring embedded in the elastic body part, and a tip end surface of the reinforcement ring on the coupling member side being at least partly exposed from the elastic body part and being in contact with the coupling member.

According to these features of the invention, regardless of the movement of the ball stud, the positional relation between the reinforcement ring and the coupling member is maintained, which can prevent a part of the elastic body part from being caught between the reinforcement ring and the coupling member.

The tip end surface of the reinforcement ring on the coupling member side may be exposed in a whole circumference thereof and be in contact with the coupling member, and the inner peripheral seal part may be provided on the inner peripheral surface side with respect to an area in which the reinforcement ring and the coupling member are in contact with each other.

A tip end surface of the reinforcement ring on the socket side may be at least partly exposed from the elastic body part, and when the ball stud swings with respect to the socket, the exposed part of the tip end surface of the reinforcement ring on the socket side may abut against the socket, so that a swinging range of the ball stud may be restricted.

This can prevent a part of the elastic body part from being caught between the reinforcement ring and the socket.

The features described above may be adopted in any possible combination.

### [Advantageous Effects of Invention]

As described above, according to the present invention, the seal part can be prevented from being impacted even when the ball stud greatly swings.

### [Brief Description of Drawings]

[Fig. 1]

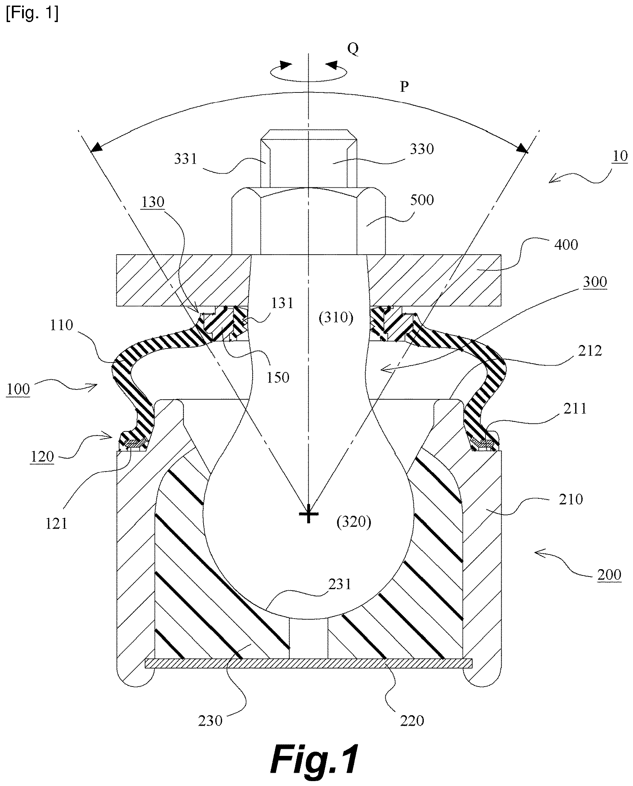

   Fig. 1 is a schematic cross-sectional view of a ball joint according to an embodiment of the present invention.
[Fig. 2]

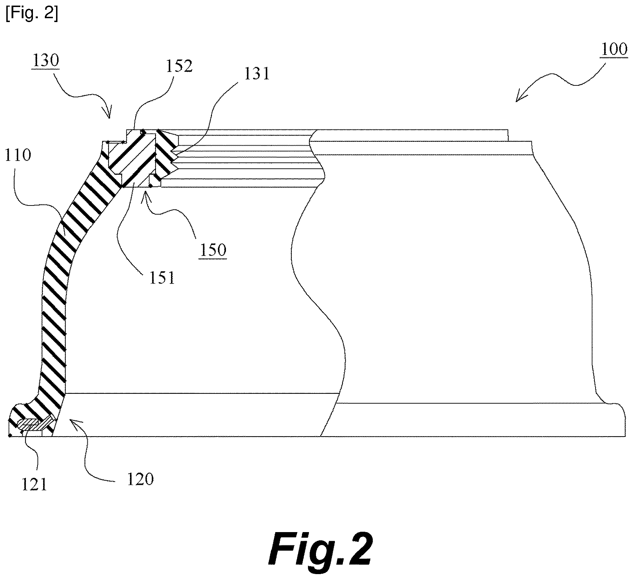

   Fig. 2 is a partly cutaway cross-sectional view of a dust cover according to the embodiment of the present invention.
[Fig. 3]

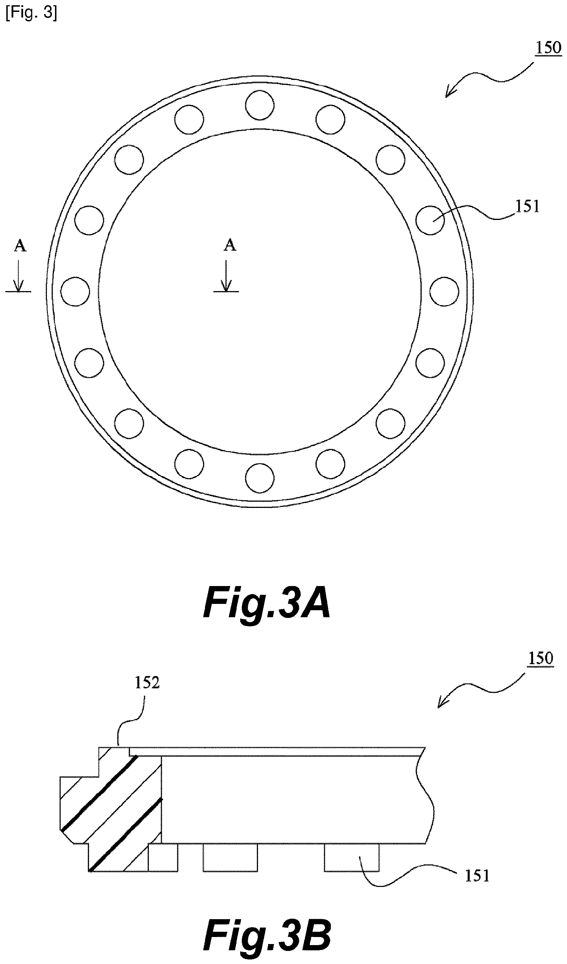

   Fig. 3 is a schematic view of a reinforcement ring according to the embodiment of the present invention.
[Fig. 4]

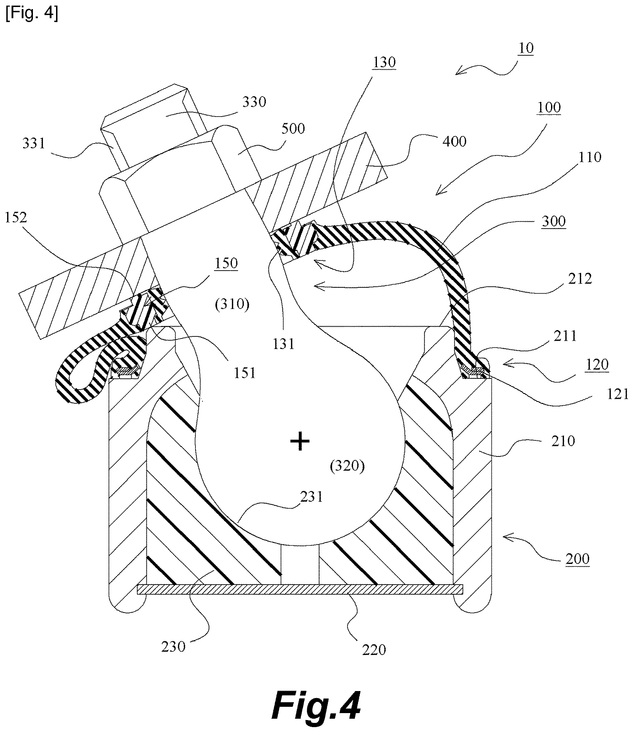

   Fig. 4 is a schematic cross-sectional view of a ball joint according to the embodiment of the present invention.

### [Description of Embodiments]

Referring to the drawings, a mode for carrying out the present invention will be described in detail on the basis of an embodiment by way of example. Note however that for example the dimensions, materials, shapes, and relative arrangements of the components in the description of the embodiment are not intended to limit the scope of the invention to those described unless otherwise specified.

### (Embodiment)

Referring to Figs. 1 to 4, a ball joint and a dust cover according to the embodiment of the present invention will be described. The ball joint according to the embodiment is provided in various devices for example in a vehicle.

### <Ball Joint>

Referring to Figs. 1 and 4, an overall structure of the ball joint according to the embodiment will be described. Figs. 1 and 4 are schematic cross-sectional views of the ball joint according to the embodiment of the present invention. Figs. 1 and 4 are cross-sectional views of the dust cover and other elements taken along a plane including a central axis of a shaft of a ball stud provided in the ball joint. The ball stud is in an upright state in Fig. 1, and the ball stud is in a maxim swung state in Fig. 4.

The ball joint 10 according to the embodiment has a ball joint main body and a dust cover 100 attached to the ball joint main body. The ball joint main body has a ball stud 300, a socket 200 that supports the ball stud 300 in a rotatable and swingable manner, and a knuckle 400 as a coupling member that is coupled to the shaft 310 of the ball stud 300.

The ball stud 300 has a spherical part 320 at one end of the shaft 310. The socket 200 has an annular case 210, a bottom plate 220 fixed to the bottom side of the case 210, and a bearing 230 for the spherical part 320. The bearing 230 has a bearing surface 231 which is a spherical surface having a radius equal to the radius of curvature of the spherical part 320. The knuckle 400 is coupled to the shaft 310 by a nut 500 on an opposite side to the spherical part 320 of the shaft 310. A threaded part 331 is provided on an outer peripheral surface of a tip end 330 of the shaft 310, and the nut 500 is screwed onto the threaded part 331. The ball joint 10 having the above-described structure allows the ball stud 300 to rotate (as illustrated by an arrow Q in Fig. 1) and swing (as illustrated by an arrow P in Fig. 1) with respect to the socket 200.

The ball joint 10 according to the embodiment is provided with the dust cover 100 to prevent water and dust from entering the joint part and to prevent grease from coming out of the joint part.

### <Dust Cover>

With reference to Figs. 2 and 3 in particular, the dust cover 100 according to the embodiment will be described. Fig. 2 is a partially cutaway cross-sectional view of the dust cover 100 according to the embodiment of the present invention. Fig. 2 shows the dust cover 100 in a state in which no external force acts on it. When no external force acts on the dust cover 100, the dust cover 100 has a substantially rotationally symmetric shape. Fig. 2 shows, in the left part, a crosssection of the dust cover 100 taken along a plane including the central axis of the dust cover 100 with no external force acting on the dust cover 100. Figs. 3A and 3B are schematic views of a reinforcement ring according to the embodiment of the present invention. Fig. 3A is a bottom view of the reinforcement ring and Fig. 3B is a cross-sectional view taken along A-A line in Fig. 3A.

The dust cover 100 includes a deformable film-like body part 110, a fixed part 120 provided on one end side of the body part 110 and fixed to the socket 200, and a seal part 130 provided on the other side of the body part 110. The body part 110 is shaped to have a middle part outwardly expanded. The dust cover 100 is largely made of an elastic body such as rubber. More specifically, the dust cover is made of an elastic material except for reinforcement rings 121 and 150 respectively embedded in the fixed part 120 and the seal part 130. In other words, the body part 110, the fixed part 120, and the seal part 130 are provided integrally except for the reinforcement rings 121 and 150.

The reinforcement ring 121 is embedded in the elastic body part at the fixed part 120, so that the fixed part 120 is fitted into an annular notch 211 formed at a tip end of the case 210 of the socket 200 and fixed therein (as illustrated in Fig. 1). The reinforcement ring 121 is made of a material with high rigidity such as a metal.

The seal part 130 having an elastic body part is integrally provided with other parts including the body part 110 as described above. An inner peripheral surface of the elastic body part is formed by an inner peripheral seal part 131 which is configured to slide on an outer peripheral surface of the shaft 310 of the ball stud 300. The inner peripheral seal part 131 according to the embodiment includes a plurality of annular protrusions. The reinforcement ring 150 is embedded in the elastic body part of the seal part 130 as described above.

As shown in Fig. 3, the reinforcement ring 150 is made of an annular member. The reinforcement ring 150 is made of a material with higher rigidity than the elastic body part such as nylon resin. A plurality of cylindrical protrusions 151 are provided on a bottom side of the reinforcement ring 150. According to the embodiment, the plurality of protrusions 151 are provided at equal intervals, but the protrusions do not necessarily need to be provided at equal intervals. A hollow cylindrical protrusion 152 is provided on an upper surface side of the reinforcement ring 150. When the reinforcement ring 150 is embedded in the elastic body part, tip end surfaces of the plurality of protrusions 151 and a tip end surface of the cylindrical protrusion 152 are exposed from the elastic body part.

The dust cover 100 may be obtained for example by molding the elastic body part by insert molding using the reinforcement rings 121 and 150 as insert parts. The reinforcement ring 150 according to the embodiment has the plurality of protrusions 151 on a bottom surface side (the socket 200 side) and the hollow cylindrical protrusion 152 on a top surface side (the knuckle 400 side). However, alternatively, in order to enable insert molding, the reinforcement ring may have a hollow cylindrical protrusion on the bottom surface side and a plurality of protrusions on the upper surface side, or the reinforcement ring may have a plurality of protrusions on both surface sides. Note however that the advantage of using the structure of the reinforcement ring 150 according to the embodiment is that the need for an element such as a positioning pin for positioning the reinforcement ring 150 is eliminated and a cost can be reduced.

When the dust cover 100 having the above-described structure is assembled into the ball joint 10, at least a part of the tip end surface of the reinforcement ring 150 on the knuckle 400 side (the part exposed from the elastic body part) is in contact with the knuckle 400. More specifically, the tip end surface of the reinforcement ring 150 on the knuckle 400 side (the tip end surface of the protrusion 152) is exposed in a whole circumference (entire periphery), and the exposed part is configured to be in contact with the knuckle 400. The inner peripheral seal part 131 is provided on the inner peripheral surface side with respect to an area in which the reinforcement ring 150 and the knuckle 400 are in contact with each other (as illustrated in Figs. 1 and 4).

At least a part of the tip end surface of the reinforcement ring 150 on the socket 200 side (corresponding to the tip end surface parts of the plurality of protrusions 151) is exposed from the elastic body part. When the ball stud 300 swings with respect to the socket 200, the exposed part of the tip end surface of the reinforcement ring 150 on the socket 200 side abuts against an upper end surface 212 of the socket 200, so that the swinging range of the ball stud 300 is restricted (as illustrated in Fig. 4).

### <Advantages of Ball Joint and Dust Cover According to Embodiment>

According to the ball joint 10 and the dust cover 100 of the embodiment, at least a part of the tip end surface of the reinforcement ring 150 on the knuckle 400 side (the tip end surface of the protrusion 152) is exposed from the elastic body part and in contact with the knuckle 400. This allows a positional relation between the reinforcement ring 150 and the knuckle 400 to be kept regardless of the movement of the ball stud 300. This prevents a part of the elastic body part from being caught between the reinforcement ring 150 and the knuckle 400.

At least a part of the tip end surface of the reinforcement ring 150 on the socket 200 side (corresponding to the tip end surface parts of the plurality of protrusions 151) is exposed from the elastic body part. When the ball stud 300 swings with respect to the socket 200, the exposed part of the tip end surface of the reinforcement ring 150 on the socket 200 side abuts against the upper end surface 212 of the socket 200, which restricts the swinging range of the ball stud 300. This prevents a part of the elastic body part from being caught between the reinforcement ring 150 and the socket 200.

### [Reference Signs List]

- 10: Ball joint
- 100: Dust cover
- 110: Body part
- 120: Fixed part
- 121: Reinforcement ring
- 130: Seal part
- 131: Inner peripheral seal part
- 150: Reinforcement ring
- 151: Protrusion
- 152: Protrusion
- 200: Socket
- 210: Case
- 211: Notch
- 212: Upper end surface
- 220: Bottom plate
- 230: Bearing
- 231: Bearing surface
- 300: Ball stud
- 310: Shaft
- 320: Spherical part
- 330: Tip end
- 331: Threaded part
- 400: Knuckle
- 500: Nut

## Claims

1. A ball joint comprising:
a ball joint main body having a ball stud which has a shaft and a spherical part at one end of the shaft, a socket which has a bearing for the spherical part and supports the ball stud in a rotatable and swingable manner, and a coupling member coupled to the shaft on an opposite side to the spherical part of the shaft; and
a dust cover attached to the ball joint main body, wherein
the dust cover comprising:
a deformable body part;
a fixed part provided to the body part on one end side and fixed to the socket; and
a seal part provided to the body part on another end side,
the seal part comprising:
an elastic body part provided integrally with the body part and having an inner peripheral seal part which is configured to slide on an outer peripheral surface of the shaft; and
a reinforcement ring embedded in the elastic body part, and
a tip end surface of the reinforcement ring on the coupling member side being at least partly exposed from the elastic body part and being in contact with the coupling member.

2. The ball joint according to claim 1, wherein the tip end surface of the reinforcement ring on the coupling member side is exposed in a whole circumference thereof and is in contact with the coupling member, and the inner peripheral seal part is provided on the inner peripheral surface side with respect to an area in which the reinforcement ring and the coupling member are in contact with each other.

3. The ball joint according to claim 1 or 2, wherein a tip end surface of the reinforcement ring on the socket side is at least partly exposed from the elastic body part, and when the ball stud swings with respect to the socket, the exposed part of the tip end surface of the reinforcement ring on the socket side abuts against the socket, so that a swinging range of the ball stud is restricted.

4. A dust cover configured to be attached to a ball joint main body having a ball stud which has a shaft and a spherical part at one end of the shaft, a socket which has a bearing for the spherical part and supports the ball stud in a rotatable and swingable manner, and a coupling member coupled to the shaft on an opposite side to the spherical part of the shaft, wherein
the dust cover comprising:
a deformable body part;
a fixed part provided to the body part on one end side and fixed to the socket; and
a seal part provided to the body part on another end side,
the seal part comprising:
an elastic body part provided integrally with the body part and having an inner peripheral seal part which is configured to slide on an outer peripheral surface of the shaft; and
a reinforcement ring embedded in the elastic body part, and
a tip end surface of the reinforcement ring on the coupling member side being at least partly exposed from the elastic body part and being in contact with the coupling member.

5. The dust cover according to claim 4, wherein the tip end surface of the reinforcement ring on the coupling member side is exposed in a whole circumference thereof and is in contact with the coupling member, and the inner peripheral seal part is provided on the inner peripheral surface side with respect to an area in which the reinforcement ring and the coupling member are in contact with each other.

6. The dust cover according to claim 4 or 5, wherein a tip end surface of the reinforcement ring on the socket side is at least partly exposed from the elastic body part, and when the ball stud swings with respect to the socket, the exposed part of the tip end surface of the reinforcement ring on the socket side abuts against the socket, so that a swinging range of the ball stud is restricted.
